# DEMANDE DE BREVET EUROPEEN

(11) **EP 1 705 364 A1**
(43) Date de publication de la demande: **27.09.2006**
(21) Numéro de dépôt: 06300141.6
(22) Date de dépôt: 15.02.2006
(51) Int. Cl.: F02M 35/10, F02B 31/08

(54) **Circuit d'admission d'air comportant deux volets mobiles**

(30) Priorité: 21.03.2005 FR 0550718
(71) Demandeur: Renault s.a.s., 92100 Boulogne Billancourt (FR)
(72) Inventeur: Deleforterie, Nicolas, 78380, Bougival (FR); Beisbardt, Olivier, 91470, Forges les Bains (FR)

(57) **Abrégé**

L'invention propose un circuit d'admission (10) pour un moteur (12) à combustion interne, qui communique avec les cylindres (14) du moteur (12), qui comporte :
-un premier conduit d'admission (16) et un deuxième conduit d'admission (18) associés à chaque cylindre (14),
-un répartiteur de gaz (20) comportant une première chambre (22) qui communique avec les premiers conduits d'admission (16), une deuxième chambre (24) qui communique avec les deuxièmes conduits d'admission (18), et un distributeur (26) qui comporte deux conduits avals (30a, 30b) qui débouchent dans la première et la deuxième chambre (22, 24),
-un premier et un deuxième volets mobiles (34, 36) qui sont agencés dans le distributeur (26) de manière à faire varier l'intensité du mouvement tourbillonnaire et/ou le débit du flux de gaz d'admission,

caractérisé en ce que le premier volet mobile (34) est agencé dans le premier conduit aval (30a) du distributeur (26) et en ce que le deuxième volet mobile (36) est agencé dans le deuxième conduit aval (30b) du distributeur (26).

## Description

L'invention propose un circuit d'admission d'air pour un moteur à combustion interne qui comporte des moyens pour faire varier l'intensité du mouvement tourbillonnaire et des moyens pour faire varier le débit d'air alimentant le moteur.

L'invention propose plus particulièrement un circuit d'admission d'air ou d'un mélange air/carburant pour un moteur à combustion interne, notamment du type Diesel à injection directe, qui communique, par la face inférieure d'une culasse, avec les chambres de combustion de plusieurs cylindres du moteur, du type qui comporte :
- un premier conduit d'admission et un deuxième conduit d'admission associés à chaque cylindre, dont au moins le premier conduit d'admission débouche dans la chambre de combustion associée de sorte que le flux de gaz admis forme un mouvement tourbillonnaire ordonné du type "swirl" autour de l'axe de la chambre de combustion,
- un répartiteur de gaz comportant une première chambre qui communique avec chacun des premiers conduits d'admission, une deuxième chambre qui communique avec chacun des deuxièmes conduits d'admission, et un distributeur qui comporte un conduit amont au niveau duquel le flux de gaz d'admission pénètre dans le répartiteur et un premier et un deuxième conduits avals qui débouchent dans la première et la deuxième chambre, respectivement, et qui sont traversés par le premier ou le deuxième flux de gaz, respectivement
- un premier et un deuxième volet mobiles qui sont agencés dans le distributeur de manière à faire varier sélectivement et de manière sensiblement continue l'intensité dudit mouvement tourbillonnaire et/ou le débit du flux de gaz d'admission pénétrant dans le répartiteur.

Pour satisfaire aux normes relatives aux émissions polluantes, il est important de réduire la consommation spécifique du moteur, notamment en maîtrisant les paramètres de combustion du moteur.

Dans les moteurs à combustion interne, qu'il s'agisse des moteurs à essence ou surtout des moteurs Diesel à injection directe, pour assurer un mélange correct entre l'air et le carburant dans le cylindre, il est connu d'imprimer à l'air un mouvement tourbillonnaire de rotation dans la chambre de combustion, aussi appelé mouvement de "swirl".

Dans un moteur Diesel à injection directe, un tel mouvement tourbillonnaire, ou "swirl", nécessaire au moment de la phase d'injection, est particulièrement souhaité pour le fonctionnement du moteur à faible charge.

On définit en outre la perméabilité du système d'admission, comme étant le rapport de la section effective de passage dégagée par les soupapes d'admission à la section transversale du cylindre. La perméabilité dépend donc, non seulement de la différence de pression de part et d'autre des soupapes d'admission, mais aussi du débit d'air admis dans le cylindre.

Le document JP-A-2001073891 décrit un circuit d'admission d'air comportant pour chaque cylindre, un premier conduit d'admission qui est conformé de manière à produire le mouvement tourbillonnaire dit de "swirl", et un deuxième conduit d'admission qui permet d'améliorer le débit d'air admis dans le cylindre.

Le circuit d'admission comporte aussi une première chambre qui communique avec tous les premiers conduits d'admission, une deuxième chambre qui communique avec tous les deuxièmes conduits et un distributeur qui divise le flux de gaz d'admission en deux flux alimentant respectivement la première chambre et la deuxième chambre.

Selon ce document, le circuit d'alimentation comporte un volet mobile qui est agencé dans le distributeur de manière à faire varier le débit du flux de gaz alimentant la première chambre, afin de faire varier l'intensité du mouvement tourbillonnaire dans chaque cylindre.

Il est en outre connu d'agencer dans le distributeur un deuxième volet qui permet de faire varier le débit total des gaz d'admission, notamment pour couper l'alimentation du moteur en gaz d'admission, en vue de le stopper.

Le flux de gaz alimentant la première chambre subit alors des perturbations aérodynamiques et des pertes de charges provoquées par les deux volets, tandis que le flux de gaz alimentant la deuxième chambre subit les perturbations et les pertes de charge provoquées seulement par le deuxième volet.

L'invention a pour but de proposer un circuit d'alimentation d'un moteur en gaz d'admission, pour lequel les flux de gaz alimentant chacune des deux chambres du répartiteur subissent moins de perturbations aérodynamiques provoquées par les volets mobiles.

Dans ce but, l'invention propose un circuit d'admission du type décrit précédemment, caractérisé en ce que le premier volet mobile est agencé dans le premier conduit aval du distributeur pour faire varier le débit du premier flux de gaz et en ce que le deuxième volet mobile est agencé dans le deuxième conduit aval du distributeur pour faire varier le débit du deuxième flux de gaz.

Selon d'autres caractéristiques de l'invention :
- le débit de flux de gaz d'admission entrant dans le répartiteur est déterminé simultanément en fonction de la position du premier volet mobile dans le premier conduit et par la position du deuxième volet mobile dans le deuxième conduit ;
- l'intensité du mouvement tourbillonnaire est déterminée uniquement en fonction de la position du premier volet dans le premier conduit aval ;
- chaque volet mobile est monté mobile dans le conduit aval associé entre une position extrême d'ouverture du conduit aval, dans laquelle le volet n'obture pas le conduit aval, et une position extrême de fermeture du conduit, dans laquelle le volet obture en totalité le conduit aval associé.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en vue de dessus avec arrachement d'un moteur à combustion interne comportant un circuit d'admission d'air dont le répartiteur comporte deux chambres ;
- la figure 2 est une vue en section verticale suivant la ligne 2-2 du répartiteur représenté à la figure 1, montrant l'agencement des volets mobiles dans le séparateur conformément à un mode de réalisation antérieur ;
- la figure 3 est une vue similaire à celle de la figure 2, dans laquelle les volets mobiles sont agencés dans le séparateur conformément à l'invention.

Dans la description qui va suivre, des éléments identiques, similaires ou analogues seront désignés par les mêmes chiffres de référence.

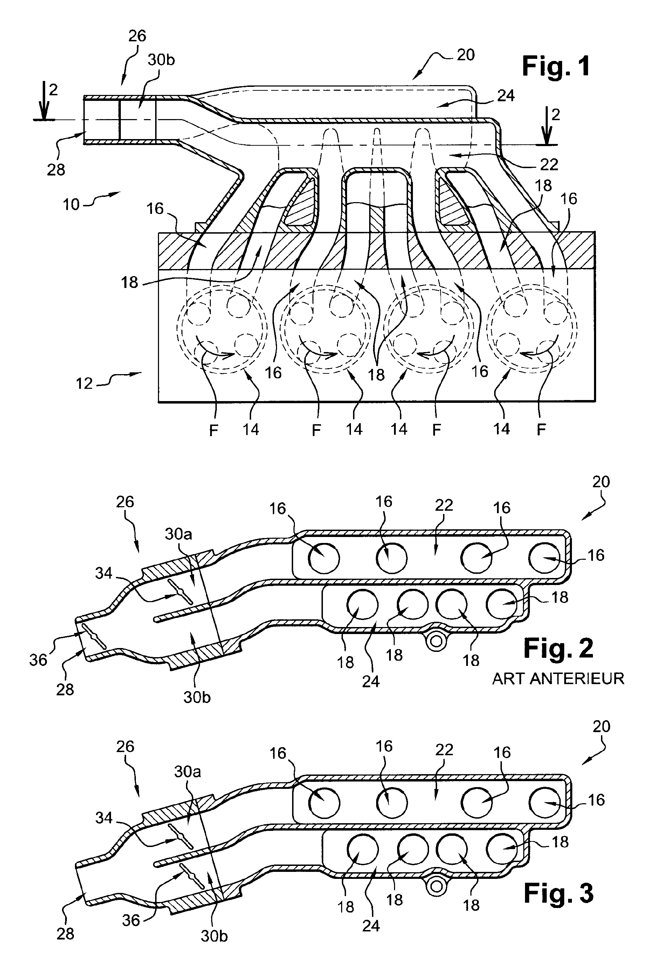

On a représenté à la figure 1 un circuit d'admission 10 d'air ou d'un mélange air/carburant, que l'on appellera par la suite gaz d'admission, pour un moteur à combustion 12 comportant plusieurs cylindres 14, ici au nombre de quatre.

Le circuit d'admission 10 comporte un premier conduit d'admission 16 et un deuxième conduit d'admission 18 associés à chaque cylindres 14, et qui débouchent dans la chambre de combustion du cylindre 14 associé.

Le premier conduit d'admission 16 est conformé de manière que le flux de gaz d'admission pénétrant dans la chambre de combustion forme un mouvement tourbillonnaire autour de l'axe principal du cylindre 14 associé, ce mouvement tourbillonnaire, que l'on a représenté par les flèches "F" à la figure 1, est communément appelé mouvement de "swirl".

Le deuxième conduit d'admission 18 permet d'assurer le remplissage en gaz d'admission de manière efficace de la chambre de combustion.

Le circuit d'admission 10 comporte aussi un répartiteur 20 des gaz d'admission vers les premiers conduits d'admission 16 et vers les deuxièmes conduits d'admission 18, qui comporte une première chambre 22 dont le volume intérieur est relié à chacun des premiers conduits d'admission 16, une deuxième chambre 24 dont le volume intérieur est relié à chacun des deuxièmes conduits d'admission 18, et un distributeur 26 qui divise le flux de gaz d'admission en un premier flux secondaire qui alimente la première chambre 22 et en un deuxième flux secondaire qui alimente la deuxième chambre 24.

La séparation du volume intérieur du répartiteur 20 en deux chambres 22, 24 isolées l'une de l'autre permet d'éviter que l'un des flux de gaz secondaires ne perturbe pas l'autre flux de gaz secondaire, et permet ainsi de faciliter la gestion électronique de l'alimentation en gaz des cylindres 14 du moteur 12.

Comme on peut le voir aux figures 2 et 3, le distributeur 26 comporte un conduit amont 28 par lequel le flux de gaz d'admission pénètre dans le répartiteur 20, et deux conduits avals 30a, 30b qui débouchent chacun dans une chambre 22, 24 associée du répartiteur 20.

Ainsi, un premier conduit aval 30a, qui débouche dans la première chambre 22, est traversé par le premier flux de gaz secondaire, et le deuxième conduit aval 30b, qui débouche dans la deuxième chambre 24, est traversé par le deuxième flux de gaz secondaire.

Le répartiteur 20 comporte aussi un premier volet 34 qui est agencé dans le premier conduit aval 30a du distributeur 26, et qui permet de faire varier de manière sensiblement continue le débit du premier flux de gaz secondaire, et donc de faire varier l'intensité du mouvement tourbillonnaire dans la chambre de combustion de chaque cylindre 14, en modifiant la section de passage du premier conduit aval 30a.

Enfin, le répartiteur 20 comporte un deuxième volet 34 qui est agencé dans le distributeur 26, et qui permet de faire varier de manière sensiblement continue le débit de gaz d'admission pour modifier le remplissage de la chambre de combustion de chaque cylindre 14.

Selon un mode de réalisation conforme à l'art antérieur, et que l'on a représenté à la figure 2, le deuxième volet 34 est agencé dans le conduit amont 28 du distributeur 26. Ainsi, le deuxième volet 34 permet à lui seul de faire varier le débit de la totalité du flux de gaz d'admission pénétrant dans le répartiteur 20.

Cependant, et comme on l'a dit plus haut, le premier flux de gaz secondaire, qui alimente la première chambre 22 du répartiteur 20, subit les perturbations aérodynamiques provoquées par le premier volet 34 et par le deuxième volet 36, il subit ainsi une perte de charge importante, ce qui limite par conséquent l'intensité du mouvement tourbillonnaire dans la chambre de combustion de chaque cylindre 14.

C'est pourquoi, conformément à l'invention, et comme on l'a représenté à la figure 3, le premier volet 34 est agencé dans le premier conduit aval 30a, et le deuxième volet 36 est agencé dans le deuxième conduit aval 30b.

Ainsi, le premier flux de gaz secondaire ne subit que les perturbations aérodynamiques provoquées par le premier volet 34, réduisant ainsi les pertes de charge sur ce premier flux de gaz.

Par contre, le deuxième flux de gaz secondaire, qui alimente la deuxième chambre 24, ne subit que les perturbations aérodynamiques provoquées par le deuxième volet 36, de manière similaire au mode de réalisation selon l'art antérieur représenté à la figure 2.

Le premier volet mobile 34 et le deuxième volet mobile 36 sont montés mobiles dans le conduit aval 30a, 30b associé entre une position d'ouverture du conduit aval 30a, 30b, dans laquelle ils obturent au minimum le conduit aval 30a, 30b associé, permettant ainsi d'avoir un débit optimum du premier flux de gaz ou du deuxième flux de gaz, et une position extrême de fermeture du conduit aval 30a, 30b associé dans laquelle le débit du premier flux de gaz secondaire ou du deuxième flux de gaz secondaire est nul.

Par conséquent, le débit du flux de gaz d'admission entrant dans le répartiteur est déterminé simultanément en fonction de la position du premier volet 34 dans le premier conduit aval 30a et par la position du deuxième volet 36 dans le deuxième conduit aval 30b.

Ainsi, par exemple, pour couper l'alimentation du moteur en gaz d'admission, le premier volet 34 et le deuxième volet 36 sont tous les deux dans une position dans laquelle ils obturent le conduit aval 30a, 30b associé.

Selon un autre avantage de l'invention, il est possible de modifier le débit du deuxième flux secondaire de gaz indépendamment du débit du premier flux secondaire de gaz, contrairement au mode de réalisation selon l'art antérieur pour lequel une variation du débit du deuxième flux secondaire de gaz nécessite de faire varier le débit total du flux de gaz d'admission, ce qui provoque alors une variation du débit du premier flux secondaire de gaz.

## Revendications

1. Circuit d'admission (10) d'air ou d'un mélange air/carburant pour un moteur (12) à combustion interne, notamment du type Diesel à injection directe, qui communique, par la face inférieure d'une culasse, avec les chambres de combustion de plusieurs cylindres (14) du moteur (12), du type qui comporte :
- un premier conduit d'admission (16) et un deuxième conduit d'admission (18) associés à chaque cylindre (14), dont au moins le premier conduit d'admission (16) débouche dans la chambre de combustion associée de sorte que le flux de gaz admis forme un mouvement tourbillonnaire ordonné du type "swirl" autour de l'axe de la chambre de combustion,
- un répartiteur de gaz (20) comportant une première chambre (22) qui communique avec chacun des premiers conduits d'admission (16), une deuxième chambre (24) qui communique avec chacun des deuxièmes conduits d'admission (18), et un distributeur (26) qui comporte un conduit amont (30) au niveau duquel le flux de gaz d'admission pénètre dans le répartiteur (20) et un premier et un deuxième conduits avals (30a, 30b) qui débouchent dans la première et la deuxième chambre (22, 24), respectivement, et qui sont traversés par le premier ou le deuxième flux de gaz, respectivement,
- un premier et un deuxième volet mobiles (34, 36) qui sont agencés dans le distributeur (26) de manière à faire varier sélectivement et de manière sensiblement continue l'intensité dudit mouvement tourbillonnaire et/ou le débit du flux de gaz d'admission pénétrant dans le répartiteur (20),
**caractérisé en ce que** le premier volet mobile (34) est agencé dans le premier conduit aval (30a) du distributeur (26) pour faire varier le débit du premier flux de gaz et **en ce que** le deuxième volet mobile (36) est agencé dans le deuxième conduit aval (30b) du distributeur (26) pour faire varier le débit du deuxième flux de gaz.

2. Circuit d'admission (10) selon la revendication précédente, **caractérisé en ce que** le débit de flux de gaz d'admission entrant dans le répartiteur (20) est déterminé simultanément en fonction de la position du premier volet mobile (34) dans le premier conduit (30a) et par la position du deuxième volet mobile (36) dans le deuxième conduit (30b).

3. Circuit d'admission (10) selon l'une quelconque des revendications précédentes, **caractérisé en ce que** l'intensité du mouvement tourbillonnaire est déterminée uniquement en fonction de la position du premier volet (34) dans le premier conduit aval (30a).

4. Circuit d'admission (10) selon l'une quelconque des revendications précédentes, **caractérisé en ce que** chaque volet mobile (34, 36) est monté mobile dans le conduit aval (30a, 30b) associé entre une position extrême d'ouverture du conduit aval (30a, 30b), dans laquelle le volet (34, 36) n'obture pas le conduit aval (30a, 30b), et une position extrême de fermeture du conduit (30a, 30b), dans laquelle le volet (34, 36) obture en totalité le conduit aval (30a, 30b) associé.
